# EUROPÄISCHE PATENTSCHRIFT

(11) **EP 0 724 995 B1**
(45) Veröffentlichungstag und Bekanntmachung des Hinweises auf die Patenterteilung: **20.05.1998**
(21) Anmeldenummer: 95120110.2
(22) Anmeldetag: 19.12.1995
(51) Int. Cl.: B60T 8/88

(54) **Verfahren zur raddrehzahlsensorikgestützten, lastadaptiven Einstellung von Bremsdruckregelparametern für die Bremsdruckregelung in einer Fahrzeugbremsanlage**
Method for wheel speed sensor-supported, load-adaptive adjustment of brake pressure control parameters for brake pressure control in a braking device for vehicles
Procédé basé sur la vitesse de rotation des roues, sur le réglage en fonction de la charge des paramètres de pression de freinage pour la régulation de celle-ci dans un véhicule

(30) Priorität: 03.02.1995 DE 19503455
(43) Veröffentlichungstag der Anmeldung: 07.08.1996
(73) Patentinhaber: DAIMLER-BENZ AKTIENGESELLSCHAFT, 70567 Stuttgart (DE)
(72) Erfinder: Reiner, Michael, D-70736 Fellbach (DE); Spiegelberg, Gernot, Dipl.-Ing., F-67480 Rountzenheim (FR)

(56) Entgegenhaltungen:
- EP-A- 0 173 954
- DE-A- 4 007 360

## Beschreibung

Die Erfindung bezieht sich auf ein Verfahren zur raddrehzahlsensorikgestützten, lastadaptiven Einstellung von Bremsdruckregelparametern für die Bremsdruckregelung in einer Fahrzeugbremsanlage. Ein solches Verfahren ist aus der DE 40 07 360 A1 oder auch aus der DE 38 29 951 C1 bekannt.

Die Raddrehzahlinformationen werden dabei üblicherweise in Form sogenannter Radgeschwindigkeiten, d.h. dem Produkt aus Raddrehzahl und Radumfang, verarbeitet. Die Raddrehzahlinformationen können beispielsweise bei geeigneter Analyse zur Bestimmung des Beladungszustands herangezogen werden, so daß eine Beladungssensorik entbehrlich ist. Es läßt sich zudem die Verteilung des Bremsdrucks auf die verschiedenen Fahrzeugachsen und/oder das Verhältnis des Gesamtbremsdrucks zu der durch die Bremspedalstellung bestimmten Fahrzeugsollverzögerung von Startwerten ausgehend selbsttätig an den jeweiligen Beladungszustand adaptieren.

Während einer Überprüfung einer Fahrzeugbremsanlage ist es wünschenswert, die Bremsanlagenfunktion auch bezüglich der Bereitstellung des maximalen Bremsdrucks an einem jeweiligen Rad, z.B. für Diagnosezwecke oder zur Prüfung der erzielbaren Bremskräfte auf einem Rollenprüfstand, prüfen zu können. Bei einer Bremsanlage der oben beschriebenen Art besitzen die lastabhängigen Bremsdruckregelparameter jedoch im allgemeinen Werte, durch die selbst bei einer Vollbremsungsanforderung nicht der maximale Bremsdruck für jedes von der Bremsanlage abbremsbare Rad eingestellt wird, z.B. bei ungleicher Bremsdruckverteilung auf die verschiedenen Fahrzeugachsen oder bei momentan gering eingestelltem Verhältnis von Gesamtbremsdruck zu Fahrzeugsollverzögerung aufgrund einer nur geringen Fahrzeugbeladung. Eine zusätzliche Schwierigkeit besteht bei Fahrzeugbremsanlagen mit Antriebsschlupfregelung (ASR) darin, daß während einer Überprüfung der Bremsanlage auf einem Rollenprüfstand bei durch die Rollen des Rollenprüfstandes in Bewegung versetzten Rädern auf der Antriebsachse und stillstehenden Rädern auf der anderen Achse unbeabsichtigt ein ASR-Betrieb ausgelöst werden könnte, wenn dies nicht durch besondere Maßnahmen verhindert wird.

Der Erfindung liegt als technisches Problem die Bereitstellung eines Verfahrens zugrunde, mit dem Fahrzeugbremsanlagen mit lastadaptiver, raddrehzahlsensorikgestützter Bremsdruckregelung bei Bedarf auch hinsichtlich der Aussteuerung des maximal von der Bremsanlage erzeugbaren Bremsdrucks überprüft werden können.

Dieses Problem wird durch ein Verfahren mit den Merkmalen des Anspruchs 1 gelöst. Dazu ist vorgesehen, daß die Bremsdruckregelparameter unter bestimmten Bedingungen während eines Bremsanlagenprüfvorgangs auf die zur Einstellung des maximalen Bremsdrucks der Bremsanlage gehörigen Werte gesetzt werden können, so daß die Bremsanlage anschließend bei einer Vollbremsungsanforderung diesen maximalen Bremsdruck zu Testzwecken erzeugt. Eine notwendige Bedingung, die im Fall der Aktivierung des Verfahrens direkt nach einem Fahrzeugstart im Stillstand auch hinreichend ist, besteht darin, daß bei Bremsbeginn die Radgeschwindigkeiten der Räder wenigstens einer Achse seit einer vorgegebenen Wartezeit kleiner als eine vorgegebene Grenzgeschwindigkeit sind, die höchstens geringfügig größer als null ist. Die Vorgabe dieser geringen Grenzgeschwindigkeit, die typischerweise höchstens zwischen 1km/h und 3km/h liegt, sowie die Vorgabe der Wartezeit, typischerweise zwischen 3s und 5s, gewährleisten die sichere Erkennung eines für die Überprüfung der Bremsanlage bereitstehenden Fahrzeugs durch das System mittels ausreichend plausibler Meßsignale der Raddrehzahlsensorik. Diese Bedingung ermöglicht es dem Bremsanlagensystem außerdem, eindeutig zu erkennen, daß für eine nachfolgende Vollbremsungsanforderung die Einstellung des maximalen Bremsdrucks gewünscht ist. Wird die Bedingung nicht eingehalten, stellt die Bremsanlage den zu den momentanen Bremsdruckregelparameterwerten gehörigen, lastadaptierten Bremsdruck ein, und zwar bei direkt nach einem Fahrzeugstart im Stillstand erfolgendem Prüfvorgang denjenigen Bremsdruck, der zu den Startwerten der Bremsdruckregelparameter gehört. Folglich läßt sich mit dem Verfahren durch Nichteinhaltung dieser Wartezeit auch die Einstellung der lastadaptiven Bremsdruckwerte durch die Bremsanlage überprüfen.

In Weiterbildung der Erfindung nach Anspruch 2 ist als weitere Bedingung die Unterschreitung einer zweiten, gegenüber der ersten größeren Grenzgeschwindigkeit, die z.B. zwischen 7km/h und 12km/h liegt, durch alle Radgeschwindigkeiten der betroffenen Räder seit einer vorgegebenen weiteren, gegenüber der ersten größeren Wartezeit, z.B. zwischen 10s und 20s, bei Aktivierung einer Bremsanforderung zwecks Überprüfung der Bremsanlage vorgesehen, bei deren Nichteinhaltung die Einstellung des maximalen Bremsdrucks nicht freigegeben wird. Dies gewährleistet, daß das System selbsttätig eine Fahrbetriebsphase mit kurz aufeinanderfolgenden Bremsungen von einer gewünschten Bremsanlagenüberprüfung mit maximalem Bremsdruck bei laufendem Fahrzeug zu unterscheiden vermag.

Eine Weiterbildung der Erfindung nach Anspruch 3 sieht vor, für eine Bremsanlage mit ASR die ASR-Funktion deaktiviert zu halten, wenn das System erkennt, daß sich das Getriebe in Leerlaufstellung befindet. Damit wird auf einfache Weise sichergestellt, daß die ASR-Funktion nicht unbeabsichtigterweise während einer Überprüfung der Bremsanlage auf einem Rollenprüfstand aktiviert wird. Zur Realisierung dieser Maßnahme erhält die Bremsanlagensteuerung ein entsprechendes Getriebestellungssignal von der Getriebesteuerung.

In Weiterbildung der Erfindung nach Anspruch 4 wird bei einer Bremsanlage mit ASR die ASR-Funktion während einer Bremsanlagenüberprüfung auf einem Rollenprüfstand deaktiviert gehalten, sobald die ASR-Steuerung den Rollenprüfstandsbetrieb anhand eines entsprechenden Rollenprüfstands-Erkennungsbits oder der zur Freigabe des maximalen Bremsdrucks gestellten Radgeschwindigkeitsbedingungen erkennt.

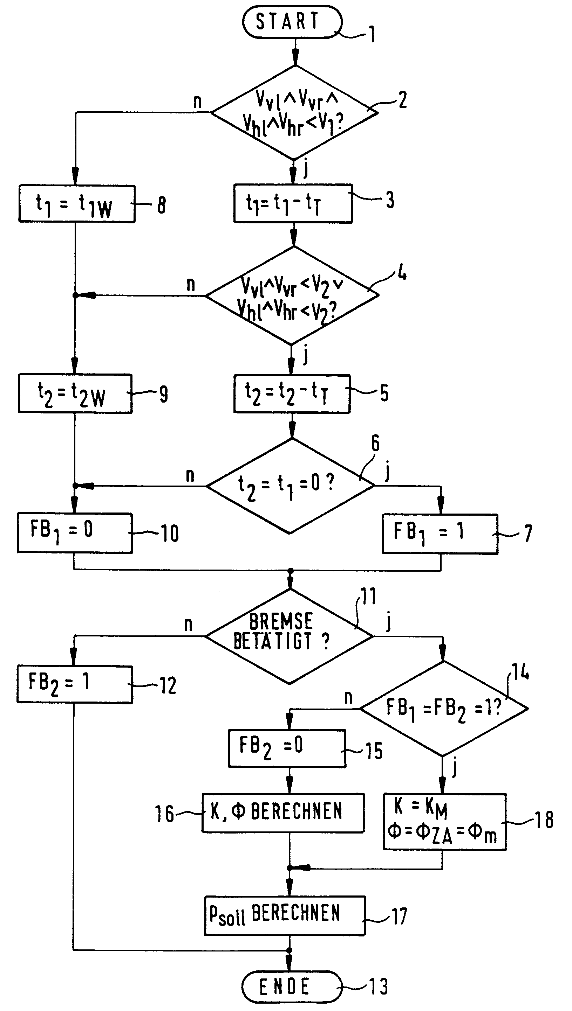

Eine bevorzugte Ausführungsform der Erfindung ist in der Zeichnung dargestellt und wird nachfolgend beschrieben.

Die einzige Figur zeigt einen Programmablaufplan eines Verfahrens zur Überprüfung einer Fahrzeugbremsanlage mit lastadaptiver, raddrehzahlsensorikgestützter Bremsdruckregelung für die Räder zweier Achsen.

Der in der Figur dargestellte Verfahrensablauf wird nach Aktivierung des Verfahrens zyklisch mit einer vorgegebenen Taktzeit (t_{T}) durchlaufen. Mit dem Fahrzeugstart bzw. dem Start der Steuerung der Bremsanlage werden Anfangswerte für benötigte Parameter festgelegt, und zwar im vorliegenden Beispielfall 0s für einen ersten Wartezeitzählwert (t₁), 5s für einen zweiten Wartezeitzählwert (t₂), der Wert null für ein Geschwindigkeitsbedingungs-Erkennungsbit (FB₁) sowie der Wert eins für ein Bremsbeginn-Erkennungsbit (FB₂). Außerdem werden eine erste Wartezeit (t_{1W}) auf 20s, eine zweite Wartezeit (t_{2W}) auf 5s, eine erste Grenzgeschwindigkeit (v₁) auf 12km/h und eine zweite Grenzgeschwindigkeit (v₂) auf 1km/h festgesetzt. Die Bedeutung der genannten Parameter ergibt sich aus der weiteren Beschreibung.

Jeder Verfahrenszyklus beginnt mit einem Startschritt (1), an den sich ein Abfrageschritt (2) anschließt, in welchem festgestellt wird, ob die Radgeschwindigkeiten des vorderen linken Rades (vᵥₗ), des vorderen rechten Rades (vᵥᵣ), des hinteren linken Rades (vₕₗ) und des hinteren rechten Rades (vₕᵣ) sämtlich kleiner als die erste Grenzgeschwindigkeit (v₁) von 12km/h sind. Bei diesen Radgeschwindigkeiten (vᵥₗ, vᵥᵣ, vₕₗ, vₕᵣ) handelt es sich um die von einer üblichen Raddrehzahlsensorik eines Radschlupfregelsystems gewonnenen und einer Filterung unterzogenen Geschwindigkeitswerte. Ist die genannte Bedingung erfüllt, so wird vom ersten Wartezeitzählwert (t₁) die Taktzeit (t_{T}) abgezogen (Schritt 3), wobei der erste Wartezeitzählwert (t₁) auf wenigstens den Wert null beschränkt bleibt. Dann folgt ein zweiter Radgeschwindigkeits-Abfrageschritt (4), in welchem festgestellt wird, ob die beiden Radgeschwindigkeiten (vᵥₗ, vᵥᵣ) der Vorderachsräder oder die beiden Radgeschwindigkeiten (vₕₗ, vₕᵣ) der Hinterachsräder kleiner als die zweite Grenzgeschwindigkeit (v₂) von 1km/h sind. Trifft dies zu, so wird der zweite Wartezeitzählwert (t₂) ebenfalls um die Taktzeit (t_{T}) erniedrigt (Schritt 5), wobei auch dieser Zählwert (t₂) nach unten auf null beschränkt bleibt. In einem nachfolgenden Abfrageschritt (6) wird nun festgestellt, ob die beiden Wartezeitzählwerte (t₁, t₂) beide null sind. Wenn dies zutrifft, wird das Geschwindigkeitsbedingungs-Erkennungsbit (FB₁) auf den Wert eins gesetzt (Schritt 7), während es ansonsten auf den Wert null gesetzt wird (Schritt 10). Wenn im zweiten Geschwindigkeitsabfrageschritt (4) festgestellt wurde, daß weder für die Vorder- noch für die Hinterachse die Radgeschwindigkeiten der beiden jeweiligen Räder unter der zweiten Grenzgeschwindigkeit (v₂) von 1km/h liegen, so wird anschließend der zweite Wartezeitzählwert (t₂) auf die zweite Wartezeitdauer (t_{2W}) gesetzt (Schritt 9), wonach wiederum das Geschwindigkeitsbedingungs-Erkennungsbit (FB₁) auf null gesetzt wird (Schritt 10). Wenn im ersten Geschwindigkeitsabfrageschritt (2) festgestellt wurde, daß mindestens eine der vier Radgeschwindigkeiten (vᵥₗ, vᵥᵣ, vₕₗ, vₕᵣ) auf oder über der ersten Grenzgeschwindigkeit (v₁) von 12km/h liegt, so wird anschließend der erste Wartezeitzählwert (t₁) auf die erste Wartezeitdauer (t_{1W}) gesetzt (Schritt 8), wonach wie bei Verneinung der zweiten Geschwindigkeitsabfrage (4) der zweite Wartzeitzählwert (t₂) auf die zweite Wartezeitdauer (t_{2W}) und das Geschwindigkeitsbedingungs-Erkennungsbit (FB₁) auf null gesetzt werden (Schritte 9 und 10).

Anschließend an den vorstehend beschriebenen Geschwindigkeitsbedingungsblock setzt der Verfahrensablauf mit einem Abfrageschritt (11) fort, in welchem festgestellt wird, ob momentan die Bremsanlage betätigt ist. Wenn dies nicht der Fall ist, wird das Bremsbeginn-Erkennungsbit (FB₂) auf eins gesetzt (Schritt 12), wonach zum Ende (13) eines Verfahrenszyklus gesprungen wird. Wird hingegen das Vorliegen einer Bremsbetätigung festgestellt, so wird als nächstes abgefragt (Schritt 14), ob sowohl das Geschwindigkeitsbedingungs-Erkennungsbit (FB₁) als auch das Bremsbeginn-Erkennungsbit (FB₂) den Wert eins besitzen. Ist dies nicht der Fall, wird das Bremsbeginn-Erkennungsbit (FB₂) auf null gesetzt (Schritt 15), und anschließend werden die Bremsdruckverteilung (φ) und das Gesamtbremsdruck/Sollverzögerungs-Verhältnis (κ) als die relevanten Bremsdruckregelparameter angepaßt an den momentanen Fahrzeugbeladungszustand neu berechnet (Schritt 16). Mit diesen aktuellen lastadaptierten Werten der Bremsdruckregelparameter (φ, κ) werden dann die Sollbremsdrücke (pₛₒₗₗ) für die von der Bremsanlage beeinflußten Fahrzeugräder berechnet (Schritt 17), wonach wiederum das Zyklusende (13) erreicht ist.

Wird in dem entsprechenden Abfrageschritt (14) hingegen festgestellt, daß das Geschwindigkeitsbedingungs-Erkennungsbit (FB₁) und das Bremsbeginn-Erkennungsbit (FB₂) beide den Wert eins besitzen, so werden in einem nachfolgenden Schritt (18) das Gesamtbremsdruck/Sollverzögerungs-Verhältnis (κ) auf einen zur Erzeugung des von der Bremsanlage maximal bereitstellbaren Bremsdrucks erforderlichen Maximalwert (κ_{M}), z.B. κ_{M}=10, und der Bremsdruckverteilungswert (φ) auf einen symmetrischen Wert (φₘ), d.h. auf den Wert eins, gesetzt. Falls das Fahrzeug mit einer in die Bremsanlage einbezogenen Zusatzachse, z.B. einer Nachlaufachse, ausgerüstet ist, wird auch für diese der symmetrische Bremsdruckverteilungswert (φ_{ZA}=1) festgesetzt. Mit den solchermaßen festgesetzten Bremsdruckregelparameterwerten werden dann wieder die Sollbremsdrücke (pₛₒₗₗ) berechnet (Schritt 17), mit der Folge, daß nunmehr alle Räder mit dem maximalen Bremsdruck der Bremsanlage beaufschlagt werden. Nach der Sollbremsdruckberechnung ist wiederum das Zyklusende (13) erreicht.

Aus dem geschilderten Verfahrensablauf resultieren folgende Eigenschaften des Bremsanlagenüberprüfungsverfahrens. Der Erkennungsbit-Abfrageschritt (14) entscheidet darüber, ob bei einer Bremsenbetätigung zur Bremsanlagenüberprüfung lastunabhängig der maximale Bremsdruck bereitgestellt wird oder ob die Bremsdruckregelparameter lastabhängig aktualisiert und die auf die aktuellen Beladungsverhältnisse abgestellten Sollbremsdrücke eingestellt werden. Ersteres ist der Fall, wenn beide Erkennungsbits (FB₁, FB₂) den Wert eins besitzen. Damit ist es möglich, die Bremsanlage sowohl bei lastadaptiver Bremsdruckeinstellung als auch jederzeit hinsichtlich ihrer Funktion bei maximaler Bremsdruckbeaufschlagung zu überprüfen. Das Geschwindigkeitsbedingungs-Erkennungsbit (FB₁) repräsentiert hierbei die Einhaltung der Geschwindigkeitsbedingungen, wie sie aus der ersten Hälfte des Verfahrenszyklus hervorgehen. Der erste Geschwindigkeitsabfrageblock (Schritte 2, 3 und 8) stellt fest, ob sämtliche Radgeschwindigkeiten ausreichend lange unterhalb von 12km/h liegen. Damit gelingt dem System die Unterscheidung eines Bremsanlagenprüfvorgangs mit gewünschtem maximalen Bremsdruck von kurz aufeinanderfolgenden Bremsungen im laufenden Fahrbetrieb. Bei Verfahrensaktivierung direkt nach einem Start des Fahrzeugs bzw. der Bremsanlagensteuerung wird wegen des anfangs auf null gesetzten ersten Wartezeitzählwertes (t₁) keine entsprechende Wartezeit wirksam. Erst wenn anschließend die erste Grenzgeschwindigkeit (v₁) einmal von einem Rad überschritten wurde, wird der erste Wartezeitzählwert (t₁) auf die festgelegte Wartezeit (t_{1W}) von 20s gesetzt, während der dann im folgenden die zugehörige erste Geschwindigkeitsbedingung (Schritt 2) ununterbrochen vorliegen muß, bevor das Geschwindigkeitsbedingungs-Erkennungsbit (FB₁) anstelle seines Anfangswertes null den Wert eins annimmt und damit eine Bremsanlagenüberprüfung bei maximalem Bremsdruck möglich wird. Als weitere, für einen Bremsanlagenprüfvorgang bei maximalem Bremsdruck erforderliche Bedingung müssen die Radgeschwindigkeiten der Räder wenigstens einer Achse gemäß des zweiten Geschwindigkeitsbedingungsblocks (Schritte 4, 5 und 9) für die vorgegebene zweite Wartezeit (t_{2W}) von 5s unter dem geringen, zweiten Bremsgeschwindigkeitswert (v₂) liegen.

Da der zugehörige, zweite Wartezeitzählwert (t₂) bereits beim Start des Fahrzeugs bzw. der Bremsanlagensteuerung auf die zweite Wartezeitdauer (t_{2W}) von 5s gesetzt ist und das Geschwindigkeitsbedingungs-Erkennungsbit (FB₁) nur dann den Wert eins annimmt, wenn beide Wartezeitzählwerte (t₁, t₂) den Wert null erreicht haben, ist es für die Überprüfung der Bremsanlage bei maximalem Bremsdruck stets Voraussetzung, daß die Radgeschwindigkeiten der Räder an einer Achse für mindestens 5s unter 1km/h liegen. Damit wird zuverlässig eine Prüfsituation bei stehendem Fahrzeug erkannt, welche die Erzeugung des maximalen Bremsdrucks erlaubt. Wenn das Fahrzeug beispielsweise mit den Rädern einer Achse von den Rollen eines Rollenprüfstandes zu Bremsanlagenprüfzwecken angetrieben wird, stehen die Räder der anderen Achse still, so daß diese Geschwindigkeitsbedingung erfüllt ist.

Durch das Bremsbeginn-Erkennungsbit (FB₂) wird bewirkt, daß die obigen Geschwindigkeitsbedingungen jeweils bezogen auf den Beginn einer Bremsbetätigung seit den jeweiligen Wartezeiten vorliegen müssen. Denn sobald eine Bremsbetätigung erkannt wurde, die beiden Erkennungsbits (FB₁, FB₂) jedoch nicht beide auf eins liegen, wird das Bremsbeginn-Erkennungsbit (FB₂) auf null gesetzt und bleibt auf diesem Wert, bis in einem späteren Zyklus wieder eine fehlende Bremsenbetätigung erkannt wurde. Durch die dann folgende Rückkehr des Bremsbeginn-Erkennungsbits (FB₂) auf den Wert eins wird anschließend die Durchführung eines Bremsanlagenprüfvorgangs bei maximalem Bremsdruck möglich, sobald zusätzlich die Geschwindigkeitsbedingungen vorliegen.

Zusammenfassend sind durch das beschriebene Verfahren somit folgende Funktionen der Fahrzeugbremsanlage überprüfbar. Findet die Überprüfung direkt nach einem Fahrzeugstart aus dem Stillstand bzw. äquivalent hierzu nach einem Start der Bremsanlagensteuerung statt, ohne daß die zweite Wartezeitdauer (t_{2W}) von 5s bis zur Bremsenbetätigung eingehalten wird, so stellt die Bremsanlage die Sollbremsdrücke entsprechend der abgespeicherten Anfangswerte für die Bremsdruckregelparameter (φ,κ) ein, denn es ist in diesem Fall seit Fahrzeugstart kein Bremsvorgang erfolgt, der zur lastabhängigen Anpassung dieser Bremsdruckregelparameter geführt hätte. Dementsprechend lassen sich mit dieser Vorgehensweise die Bremsdruckverläufe entsprechend der Startwerte der Bremsdruckregelparameter überprüfen. Wird nach einem Startvorgang die zweite Wartezeitdauer (t_{2W}) von 5s vor einer Bremsbetätigung bei erfüllten Geschwindigkeitsbedingungen eingehalten, so läßt sich an allen betroffenen Rädern die Einstellung des maximalen Bremsdrucks, z.B. 10bar, überprüfen. Außerdem läßt sich überprüfen, ob das vorgeschriebene Zeitverhalten bei vorgegebener Bremspedalbetätigungsgeschwindigkeit eingehalten wird.

Eine Überprüfung der Bremsanlage bei lastadaptiv eingestelltem Bremsdruck läßt sich dadurch vornehmen, daß mit dem Fahrzeug zunächst ein normaler Fahrbetrieb mit mehreren Bremsvorgängen zur lastadaptiven Einstellung der Bremsdruckregelparameter (κ, φ) durchgeführt und das Fahrzeug anschließend bis zum Stillstand abgebremst wird, ohne die beiden Geschwindigkeitsbedingungen, d.h. alle Radgeschwindigkeiten unter 12km/h für mindestens 20s und die Radgeschwindigkeiten an einer Achse unter 1km/h für wenigstens 5s, einzuhalten. Bei diesem Bremsvorgang stellt die Bremsanlage dann überprüfbar die Bremsdrucksollwerte entsprechend der lastadaptierten Bremsdruckregelparameter ein. Wenn nun anschließend die Bremsen gelöst und die Geschwindigkeitsbedingungen während der geforderten Wartezeiten eingehalten werden, ist nach einer erneuten Bremsbetätigung die Überprüfung der Bremsanlage wiederum bei maximalem Bremsdruck an allen Rädern möglich.

Die obige Funktionsweise im Fahrbetrieb kann alternativ zu einem tatsächlichen Fahrbetrieb auf einem Rollenprüfstand simuliert werden. Wenn sich das Fahrzeug auf dem Rollenprüfstand befindet und von diesem einem simulierten Fahrbetrieb unterworfen wird, können die Bremskräfte entsprechend der lastadaptiven Bremsdruckregelparameterwerte überprüft werden, wenn die Bremse nicht oder nur kurzzeitig gelöst wird, so daß die Geschwindigkeitsbedingungen nicht eingehalten werden. Wenn anschließend die Bremse gelöst wird und die Geschwindigkeitsbedingungen während der vorgegebenen Wartezeiten eingehalten werden, lassen sich nach einer erneuten Bremsbetätigung die durch Einstellung des maximalen Bremsdrucks maximal erreichbaren Bremskräfte überprüfen.

Um bei einer solchen Überprüfung beispielsweise einer Bremsanlage mit konventioneller ASR oder einer elektro-pneumatischen Bremsanlage mit ABS- und ASR-Funktion auf einem Rollenprüfstand eine fehlerhafte Aktivierung der ASR-Funktion bei vom Rollenprüfstand angetriebenen Antriebsachsrädern und ansonsten stehendem Fahrzeug zu verhindern, beinhaltet das Verfahren in nicht näher gezeigter Weise die Fähigkeit, die ASR-Funktion während eines solchen Prüfvorgangs deaktiviert zu halten. Dazu wird eine Aktivierung der ASR-Funktion verhindert, solange sich das Fahrzeuggetriebe in Leerlaufstellung befindet, wie dies bei einem derartigen Prüfvorgang der Fall ist. Diese Information wird der Bremsanlagensteuerung von einer Getriebesteuerung des Fahrzeugs übermittelt. Alternativ kann die ASR-Funktion während Prüfvorgängen der Bremsanlage auf einem Rollenprüfstand dadurch deaktiviert gehalten werden, daß ein solcher Rollenprüfstandsbetrieb direkt vom ASR-Steuerteil durch Anfrage eines bei aktivem Rollenprüfstandsbetrieb gesetzten Rollenprüfstands-Erkennungsbits oder durch eine Abfrage über die Einhaltung der oben beschriebenen Geschwindigkeitsbedingungen für die Freigabe des maximalen Bremsdrucks erkannt wird. Sobald ein entsprechendes Aufhebungssignal, das z.B. in der Erkennung der Betätigung des Gaspedals oder des Kupplungspedals bestehen kann, erzeugt wird, kann diese Deaktivierungsfunktion für das jeweilige Radschlupfregelsystem wieder aufgehoben werden.

Das oben beschriebene Verfahren ermöglicht somit die Überprüfung einer Bremsanlage mit lastadaptiver, raddrehzahlsensorikgestützter Bremsdruckregelung und mit einem Radschlupfregelsystem nicht nur unter den Bedingungen lastadaptiv eingestellter Bremsdrücke, sondern auch hinsichtlich der Funktion bei maximalen Bremsdruck, wobei die Ansteuerung des maximalen Bremsdrucks vom System selbsttätig bei Vorliegen geeigneter Fahrzeugzustandsbedingungen unabhängig vom aktuellen Beladungszustand und ohne Störung durch eine eventuell vorhandene Antriebsschlupfregelung vorgenommen wird.

## Patentansprüche

1. Verfahren zur raddrehzahlsensorikgestützten, lastadaptiven Einstellung von Bremsdruckregelparametern für die Bremsdruckregelung in einer Fahrzeugbremsanlage,
**dadurch gekennzeichnet, daß**
- die Bremsdruckregelparameter (κ, φ) während eines Bremsanlagen-Prüfvorgangs bei Einhaltung mindestens einer vorgegebenen Fahrzustandsbedingung selbsttätig auf maximalen Bremsdruck erzeugende Werte eingestellt werden, wobei
- eine vorgegebene Fahrzustandsbedingung darin besteht, daß bei Bremsbeginn die Radgeschwindigkeiten der Räder wenigstens einer Achse (vᵥₗ, vᵥᵣ; vₕₗ, vₕᵣ) seit einer vorgegebenen Wartezeit (t_{2W}) kleiner als eine vorgegebene Grenzgeschwindigkeit (v₂) sind, die höchstens geringfügig größer als null ist.

2. Verfahren nach Anspruch 1,
**dadurch gekennzeichnet, daß**
eine weitere vorgegebene Fahrzustandsbedingung zur Einstellung des maximalen Bremsdrucks während eines Prüfvorgangs darin besteht, daß bei Bremsbeginn die Radgeschwindigkeiten aller Räder (vᵥₗ, vᵥᵣ, vₕₗ, vₕᵣ) direkt nach einem Start des Fahrzeugs oder der Bremsanlagensteuerung oder seit einer vorgegebenen weiteren Wartezeit (t_{1W}) kleiner als eine vorgegebene weitere Grenzgeschwindigkeit (v₁) sind.

3. Verfahren nach Anspruch 1 oder 2,
**dadurch gekennzeichnet, daß**
für eine Bremsanlage mit Antriebsschlupfregelung (ASR) die ASR-Funktion deaktiviert gehalten wird, solange sich das Getriebe des Fahrzeugs in Leerlaufstellung befindet.

4. Verfahren nach Anspruch 1 oder 2,
**dadurch gekennzeichnet, daß**
für eine Bremsanlage mit Antriebsschlupfregelung (ASR) die ASR-Funktion deaktiviert gehalten wird, wenn ein Rollenprüfstandsbetrieb dadurch erkannt wird, daß der ASR-Steuerung ein Rollenprüfstandsbetrieb-Erkennungsbit oder eine Information darüber, daß bei Bremsbeginn die Radgeschwindigkeiten der Räder wenigstens einer Achse (vᵥₗ, vᵥᵣ; vₕₗ, vₕᵣ) seit einer vorgegebenen Wartezeit (t_{2W}) kleiner als eine vorgegebene Grenzgeschwindigkeit (v₂) sind, die höchstens geringfügig größer als null ist, und die Radgeschwindigkeiten aller Räder (vᵥₗ, vᵥᵣ, vₕₗ, vₕᵣ) seit einer vorgegebenen weiteren Wartezeit (t_{1W}) kleiner als eine vorgegebene weitere Grenzgeschwindigkeit (v₁) sind, zugeführt wird.

## Claims

1. Method for wheel speed sensor-supported, load adaptive adjustment of brake pressure control parameters for brake pressure control in a brake system for vehicles, characterized in that
- during a brake-system testing procedure, the brake pressure control parameters (k, φ) are automatically set to values which generate maximum brake pressure, while at least one prescribed travel state condition is observed,
- a prescribed travel state condition consisting in a situation in which, at the start of braking, the wheel speeds of the wheels of at least one axle (vᵥₗ, vᵥᵣ, vₕₗ, vₕᵣ) have been smaller, for a prescribed waiting time (t_{2W}), than a prescribed limit speed (v₂) which is at maximum slightly greater than zero.

2. Method according to Claim 1, characterized in that a further prescribed travel state condition for setting the maximum brake pressure during a testing procedure consists in a situation in which, at the start of braking, the wheel speeds of all the wheels (vᵥₗ, vᵥᵣ, vₕₗ, vₕᵣ) have been smaller, directly after the vehicle or the brake-system controller starts or for a prescribed further waiting time (t_{1W}), than a prescribed further limit speed (v₁).

3. Method according to Claim 1 or 2, characterized in that, for a brake system with a traction control system (TCS), the TCS function is kept deactivated as long as the vehicle gearbox is in the idling setting.

4. Method according to Claim 1 or 2, characterized in that, for a brake system with a traction control system (TCS), the TCS function is kept deactivated if a roller-type testbench mode is detected by virtue of the fact that the TCS controller is fed a roller-type test-bench mode detection-bit or an item of information relating to the fact that at the start of braking, the wheel speeds of the wheels of at least one axle (vᵥₗ, vᵥᵣ; vₕₗ, vₕᵣ) have been smaller, for a prescribed waiting time (t_{2W}), than a prescribed limit speed (v₂) which is at maximum slightly greater than zero, and the wheel speeds of all the wheels (vᵥₗ, vᵥᵣ, vₕₗ, vₕᵣ) have been smaller, for a prescribed further waiting time (t_{1W}), than a prescribed further limit speed (v₁).

## Revendications

1. Procédé de réglage des paramètres de la pression de freinage, basé sur une analyse sensorielle de la vitesse de rotation des roues et adapté à la charge, destiné à réguler la pression de freinage dans le circuit de freinage d'un véhicule,
caractérisé en ce que
- les paramètres de réglage de la pression de freinage (κ, φ), pendant un processus de révision du circuit de freinage, sont régulés automatiquement aux valeurs produisant la pression de freinage maximale, à condition de respecter au moins une condition de marche donnée du véhicule,
- une condition de marche donnée du véhicule consiste à faire en sorte que, au début du freinage, les vitesses des roues (vᵥₗ, vᵥᵣ, vₕₗ, vₕᵣ) d'au moins un essieu sont, depuis un temps d'attente donné (t_{2W}), inférieures à une vitesse limite donnée (v₂), qui est au maximum légèrement supérieure à zéro.

2. Procédé selon la revendication 1, caractérisé en ce qu'une autre condition de marche donnée du véhicule, destinée à définir la pression de freinage maximale pendant un processus de révision, consiste à faire en sorte que, au début du freinage, les vitesses de toutes les roues (vᵥₗ, vᵥᵣ, vₕₗ, vₕᵣ) sont, directement après le démarrage du véhicule ou du dispositif de commande du circuit de freinage ou depuis un autre temps d'attente donné (_{t1w}), inférieures à une autre vitesse limite (v₁) donnée.

3. Procédé selon la revendication 1 ou 2, caractérisé en ce que, pour un circuit de freinage muni d'un dispositif d'antipatinage, la fonction de réglage automatique du patinage (fonction ASR) reste désactivée tant que la boîte de vitesses du véhicule est au point mort.

4. Procédé selon la revendication 1 ou 2, caractérisé en ce que, pour un circuit de freinage muni d'un dispositif d'antipatinage, la fonction de réglage automatique du patinage (fonction ASR) reste désactivée si le système reconnaît le fonctionnement d'un banc d'essai à rouleaux du fait que le système transmet vers le dispositif de commande du dispositif d'antipatinage un bit d'identification du fonctionnement du banc d'essai à rouleaux ou une information signalant qu'au début du freinage les vitesses des roues d'au moins un essieu (vᵥₗ, vᵥᵣ, vₕₗ, vₕᵣ) sont, depuis un temps d'attente donné (t_{2w}), inférieures à une vitesse limite donnée (v₂), qui est au maximum légèrement supérieure à zéro, et que les vitesses de toutes les roues (vᵥₗ, vᵥᵣ, vₕₗ, vₕᵣ) sont, depuis un autre temps d'attente donné (t_{1w}), inférieures à une autre vitesse limite donnée (v₁).
